# EUROPEAN PATENT APPLICATION

(11) **EP 0 553 833 A2**
(43) Date of publication of application: **04.08.1993**
(21) Application number: 93101365.0
(22) Date of filing: 29.01.1993
(51) Int. Cl.: G06F 7/52, G06F 7/48

(54) **Digital divider and method for dividing positive or negative dividend and rounding down a remainder**

(30) Priority: 31.01.1992 JP 42066/92
(71) Applicant: VICTOR COMPANY OF JAPAN, LIMITED, Kanagawa-ku Yokohama (JP)
(72) Inventor: Nakao, Hayato, Yokosuka-shi, Kanagawa-ken (JP); Ando, Ichiro, Yokosuka-shi, Kanagawa-ken (JP)
(74) Representative: Finsterwald, Manfred, Dipl.-Ing., Dipl.-Wirtsch.-Ing.

(57) **Abstract**

A digital divider for dividing an M-bit dividend by a divisor 2^{N} (M and N are respectively a natural number, and M≧N) is provided with an incremental unit for adding a value 1 to a first binary numeral consisting of a series of binary digits positioned at higher M-N places of the dividend to generate a second binary numeral, a logical OR gate for receiving binary digits positioned at lower N places of the dividend to judge whether or not at least one of the binary digits is "1" and outputting a judging signal, a logical AND gate for receiving both the judging signal and the binary digit of the most significant bit of the dividend. A selecting signal is output from the logical AND gate. The digital divider is further provided with an (M-N)-bit selector for receiving the first and second binary numerals to select one of the numerals according to the selecting signal. In cases where the dividend is negative and at least one of the binary digits is "1", the selecting signal is designated by the binary digit "1" so that the second binary numeral is selected by the selector as a quotient. In other cases, the selecting signal is designated by the binary digit "0" so that the first binary numeral is selected by the selector as a quotient

## Description

### BACKGROUND OF THE INVENTION

### 1. FIELD OF THE INVENTION:

The present invention relates generally to a digital divider utilized for a normalization processing or a scaling processing, and more particularly to a digital divider in which a positive or negative dividend expressed by a binary notation is divided and a remainder is rounded down. Also, the present invention relates to a dividing method of a positive or negative dividend in which picture information is clearly reproduced.

### 2. DESCRIPTION OF THE RELATED ART:

Digital signals obtained by encoding picture information are generally compressed or expanded to efficiently decode the signals according to a normalization processing, a scaling processing or an inverse quantization processing. That is, values of the digital signals are adjusted within a given value in the normalization processing, and a scaled signal is output each time several digital signals are input in the scaling processing. Also, each of values of the digital signals is expressed by a binary numeral consisting of a series of binary digits. In this case, the binary numeral is multiplied or divided many times to execute the normalization processing, the scaling processing, or the inverse quantization processing.

To multiply or divide the binary numeral, the binary numeral is shifted to the left or the right by predetermined bits according to a conventional shift operation. In detail, in cases where the binary numeral is multiplied by 2ⁿ (n is a natural number), the binary digits constituting the binary numeral are shifted to the left by the n bits to obtain a product. Also, in cases where the binary numeral is divided by 2ⁿ, the binary digits are shifted to the right by the n bits to obtain a quotient.

In addition, because the size of hardware for executing multiplication and division is limited, the number of significant bits allowed to the product or the quotient is limited. Therefore, in cases where the multiplication or the division is executed in the normalization processing, the scaling processing, or the inverse quantization processing, binary digits positioned at higher places of the product or the quotient are adopted, and other binary digits positioned at lower places of the product or the quotient are always rounded. For example, the other binary digits are rounded down.

### 2.1. PREVIOUSLY PROPOSED ART:

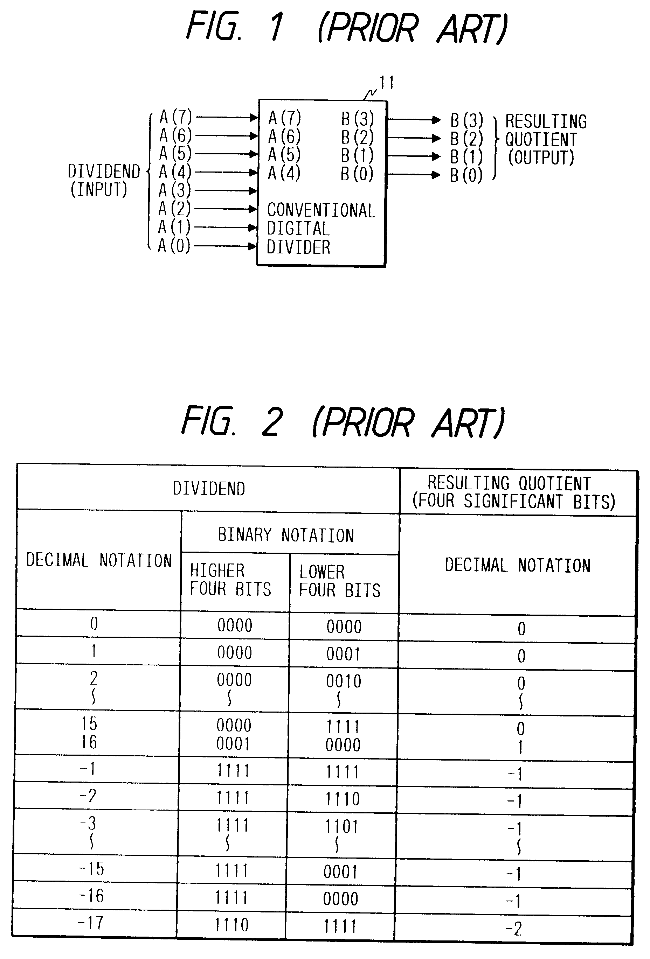

Next, a conventional digital divider is described with reference to Fig. 1.

Fig. 1 is a block diagram of a conventional digital divider to show the relationship between a dividend and a quotient obtained by dividing the dividend by a divisor 2⁴, a remainder being rounded down to obtain the quotient in the conventional digital divider.

As shown in Fig. 1, a dividend consisting of eight bits of binary digits A(7) to A(0) is input in a conventional digital divider 11. The highest bit occupied by the binary digit A(7) denotes the most significant bit of the dividend, and the lowest bit occupied by the binary digit A(0) denotes the least significant bit of the dividend. The dividend is divided by a divisor in the conventional digital divider 11 to obtain the result equivalent to a quotient. In detail, because the value of the divisor is 2⁴, higher four bits of binary digits A(7) to A(4) are selected as the resulting quotient consisting of four bits of binary digits B(3) to B(0) in the conventional digital divider 11. That is, the number of the significant digits is four in the resulting quotient. The bit occupied by the binary digit B(3) agreeing with the binary digit A(7) denotes the most significant bit of the resulting quotient, and the bit occupied by the binary digit B(0) agreeing with the binary digit A(4) indicates the least significant bit of the resulting quotient. Thereafter, the resulting quotient B(3) to B(0) are output as the quotient from the conventional digital divider 11. In this case, because the binary digits A(3) to A(0) of the dividend positioned at lower places than the fourth place of the dividend are not adopted as the quotient, a remainder generated by dividing the dividend by the divisor is rounded down.

Accordingly, the selection executed in the conventional digital divider 11 is equivalent to a shift operation executed in a shift register in which a piece of input data is shifted to the right by four bits.

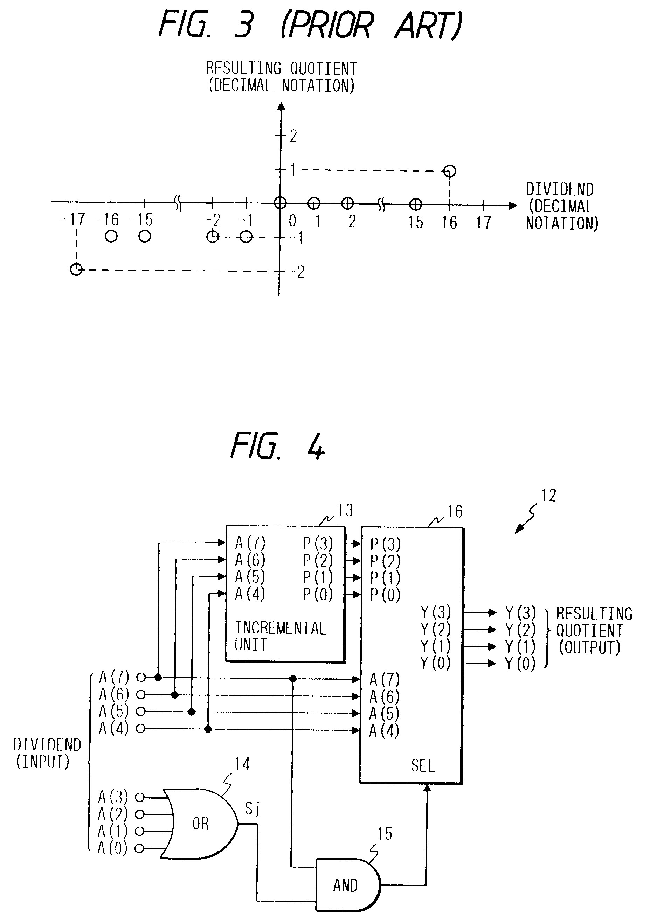

Next, a division processing executed for a piece of positive data and a piece of negative data is described in detail with reference to Figs. 2, 3.

In cases where digital signals obtained by encoding picture information are compressed or expanded, pieces of positive data and pieces of negative data are frequently multiplied or divided. For example, when the data is transformed according to an inverse discrete cosine transform (IDCT), the positive data and the negative data are required to be multiplied and divided in advance according to the inverse quantization processing to execute the normalization processing or the scaling processing.

Fig. 2 shows a plurality of eight bits of positive and negative dividends expressed by the binary notation and resulting quotient obtained by dividing the dividends by a divisor 2⁴ in the conventional digital divider shown in Fig. 1, in tabular form.

Fig. 3 graphically shows the relationship between the dividend shown in Fig. 2 and the resulting quotient shown in Fig. 2.

As shown in Fig. 2, in cases where positive values 1 to 15 expressed by the decimal notation are expressed by the binary notation, binary digits positioned at higher places than the fourth place are respectively equal to "0". Therefore, when the positive values 1 to 15 expressed by the decimal notation are respectively divided by the divisor value 2⁴ in the conventional digital divider 11, as shown in Figs. 2 & 3, the resulting quotient becomes a value 0 because the remainder obtained by dividing the dividend is rounded down.

Also, in cases where positive values 16 to 31 expressed by the decimal notation are expressed by the binary notation, a series of binary digits positioned at higher places than the fourth place is designated by "0001". Therefore, when the positive values 16 to 31 expressed by the decimal notation are respectively divided by the divisor value 2⁴ in the conventional digital divider 11, as shown in Figs. 2 & 3, the resulting quotient becomes a value 1 for the same reason.

On the other hand, in cases where negative values -1 to -15 expressed by the decimal notation are expressed by the binary notation, a series of binary digits positioned at higher places than the fourth place is designated by "1111" because each of the negative values is designated by the eight binary digits A(7) to A(0) and because each of the negative values is designated according to twos complement expression. Therefore, when the negative values -1 to -15 expressed by the decimal notation are respectively divided by the divisor value 2⁴ in the conventional digital divider 11, as shown in Figs. 2 & 3, the resulting quotient becomes a value -1 because the negative value is designated according to twos complement expression and because the most significant bit of the resulting quotient functioning as a sign bit is occupied by a binary digit "1".

Also, in cases where negative values -17 to -31 expressed by the decimal notation are expressed by the binary notation, a series of binary digits positioned at higher places than the fourth place is equal to "1110". Therefore, when the negative values -17 to -31 expressed by the decimal notation are respectively divided by the divisor value 2⁴ in the conventional digital divider 11, as shown in Figs. 2 & 3, the resulting quotient becomes a value -2.

As a result, a first absolute value of the resulting quotient obtained by dividing a positive value differs from a second absolute value of the resulting quotient obtained by dividing a negative value of which the absolute value is equal to the positive value and is not the multiple of the divisor. In addition, the second absolute value is larger than the first absolute value by a value 1. This difference between the absolute values of the resulting quotients exert an adverse influence on the definition of the picture displayed on a screen. That is, when the digital picture signals are compressed or expanded according to the normalization processing, the scaling processing or the inverse quantization processing, the definition of the picture displayed on the screen deteriorates.

### SUMMARY OF THE INVENTION

A first object of the present invention is to provide, with due consideration to the drawbacks of such a conventional digital divider, a digital divider in which a picture reproduced by compressing or expanding digital picture signals is clearly displayed on a screen even though each of the signals is transformed to a piece of negative data before the piece of negative data is divided by a divisor.

A second object of the present invention is to provide a digitally dividing method for reproducing a picture by compressing or expanding digital picture signals to clearly display on a screen even though each of the signals is transformed to a piece of negative data before the piece of negative data is divided by a divisor.

The first object is achieved by the provision of a digital divider for dividing a dividend to obtain a quotient, comprising:
adding means for adding a value 1 to a first binary numeral consisting of a series of binary digits positioned at higher places of the dividend to generate a second binary numeral;
first judging means for judging whether or not a third binary numeral consisting of a series of binary digits positioned at lower places of the dividend is zero, the dividend consisting of the binary digits positioned at the higher places thereof and the binary digits positioned at the lower places thereof;
second judging means for judging whether or not the dividend is negative; and
selecting means for selecting the second binary numeral generated by the adding means as the quotient in cases where it is judged by the first judging means that the third binary numeral is not zero and it is judged by the second judging means that the dividend is negative, selecting the first binary numeral as the quotient in cases where it is judged by the first judging means that the third binary numeral is zero, selecting the first binary numeral as the quotient in cases where it is judged by the second judging means that the dividend is not negative, and outputting the quotient.

In the above configuration, the dividend consisting of a series of binary digits is conceptually splitted into the first binary numeral consisting of a series of binary digits positioned at the higher places of the dividend and the third binary numeral consisting of a series of binary digits positioned at the lower places of the dividend. The first binary numeral is added a value 1 by the adding means to generate the second binary numeral. Thereafter, the second binary numeral is provided to the selecting means. Also, the first binary numeral is provided to the selecting means.

In addition, whether or not the third binary numeral is zero is judged by the first judging means. Also, whether or not the dividend is negative is judged by the second judging means.

Thereafter, both the judging result of the first judging means and the judging result of the second judging means are transferred to the selecting means.

In the selecting means, either the first binary numeral or the second binary numeral is selected according to both the judging results. In detail, in cases where the third binary numeral is not zero and the dividend is negative, an absolute value of the first binary numeral is larger than a value of a fourth binary numeral consisting of a series of binary digits positioned at higher places of a positive dividend of which the value agrees with the absolute value of the negative dividend. Therefore, the second binary numeral is selected as the quotient.

Also, in cases where the third binary numeral is zero, the absolute value of the first binary numeral agrees with the value of the fourth binary numeral. Therefore, the first binary numeral is selected as the quotient.

In addition, in cases where the dividend is not negative but positive or zero, the absolute value of the first binary numeral agrees with the value of the fourth binary numeral. Therefore, the first binary numeral is selected as the quotient.

Accordingly, when digital picture signals are compressed according to the normalization processing or the scaling processing, the definition of the picture displayed on a screen does not deteriorate. That is, the picture reproduced by compressing or expanding the digital picture signals can be clearly displayed on the screen even though each of the signals is transformed to a piece of negative data before the piece of negative data is divided by divisors.

It is preferred that the adding means be an incremental unit in which the binary digits positioned at the higher places of the dividend are provided to increment the value of the first binary numeral before incremented binary digits are output as the second binary numeral.

In the above configuration, the adding means is easily embodied.

Also, it is preferred that the first judging means be a logical OR gate in which the binary digits positioned at the lower places of the dividend are received before a first judging signal logically generated according to a function of an OR gate is output.

In the above configuration, in cases where the third binary numeral is zero, all of the binary digits provided to the logical OR gate are "0". That is, no remainder is generated by dividing the dividend. Therefore, the first judging signal designated by a binary digit "0" is logically output according to the function of the OR gate. Also, in cases where the third binary numeral is not zero, at least one of the binary digits provided to the logical OR gate is "1". That is, a remainder is generated by dividing the dividend. Therefore, the first judging signal designated by a binary digit "1" is logically output according to the function of the OR gate.

In addition, it is preferred that the second judging means be a logical AND gate in which both the binary digit positioned at the highest place of the dividend and the first judging signal generated by the logical OR gate are received before a second judging signal logically generated according to a function of an AND gate is provided to the selecting means.

In the above configuration, the bit positioned at the highest place of the dividend functions as a sign bit. Therefore, the sign of the dividend can be distinguished by judging the binary digit positioned at the highest place of the dividend. For example, in cases where the binary digit positioned at the highest place of the dividend is "1", the dividend is negative. Also, in cases where the binary digit positioned at the highest place of the dividend is "0", the dividend is not negative but positive or zero.

Therefore, in cases where the dividend is negative and the first judging signal is designated by the binary digit "1", the second judging signal is designated by the binary digit "1". Also, in cases where the dividend is not negative, the second judging signal is designated by the binary digit "0". Also, in cases where the first judging signal is designated by the binary digit "0", the second judging signal is designated by the binary digit "0".

Accordingly, when the second judging signal designated by the binary digit "1" is provided to the selecting means, the second binary numeral generated by the adding means is selected by the selecting means as the quotient. On th other hand, when the second judging signal designated by the binary digit "0" is provided to the selecting means, the first binary numeral generated by the adding means is selected by the selecting means as the quotient.

Further, it is preferred that the digital divider further include:
first buffer means for storing digital signals obtained by encoding picture information;
second buffer means for storing a natural number N to specify a value 2^{N} of a divisor, the number of binary digits constituting a third binary numeral judged by the first judging means being equal to the natural number N;
decoding means for decoding the digital signals stored in the first buffer means to produce dividends which each are added by the adding means and are judged in the first judging means and the second judging means; and
reproducing means for reproducing the picture information by dividing each of the dividends decoded by the decoding means by the divisor stored in the second buffer means, the picture information reproduced by the reproducing means consisting of the quotients selected by the selecting means.

In the above configuration, the digital signals are decoded to reproduce the picture information by utilizing the digital divider according to the present invention. In detail, the picture information generally obtained by photographing a subject is encoded to the digital signals. The digital signals are stored in the first buffer means before the digital signals are decoded by the decoding means. Thereafter, the dividends produced from the digital signals decoded by the decoding means are divided by the divisor to reproduce the picture information.

Accordingly, even though each of the digital signals is transformed to a piece of negative data before the piece of negative data is divided by the divisor, the picture information reproduced by compressing or expanding the digital signals can be clearly displayed on a screen.

The second object is achieved by the provision of a method for dividing a dividend consisting of M bits of binary digits (M is a natural number) by a divisor 2^{N} (N is a natural number and M≧N) to obtain a quotient, comprising the steps of:
judging whether or not at least one of lower N bits of binary digits of the dividend is "1";
outputting a first binary numeral consisting of a series of upper M-N bits of binary digits of the dividend as the quotient in cases where all of the lower N bits of binary digits of the dividend is "0";
judging whether or not the dividend is negative in cases where at least one of the lower N bits of binary digits of the dividend is "1";
outputting the first binary numeral in cases where the dividend is not negative;
adding a value 1 to the first binary numeral to produce a second binary numeral in cases where the dividend is negative; and
outputting the second binary numeral as the quotient in cases where at least one of the lower N bits of binary digits of the dividend is "1" and the dividend is negative.

In the above steps, in cases where at least one of the lower N bits of binary digits of the dividend is "1" and the dividend is negative, an absolute value of the first binary numeral is one higher than a binary numeral obtained by dividing the absolute value of the negative dividend. Therefore, the second binary numeral is output as the quotient. On the other hand, in cases where all of the lower N bits of binary digits of the dividend are "0" or in cases where the dividend is not negative, an absolute value of the first binary numeral agrees with a binary numeral obtained by dividing the absolute value of the dividend. Therefore, the first binary numeral is output as the quotient.

Accordingly, a picture reproduced by compressing or expanding digital picture signals can be clearly displayed on a screen even though each of the signals is transformed to a piece of negative data before the piece of negative data is divided by divisors.

It is preferred that the step of judging whether or not the dividend is negative include:
checking whether a binary digit positioned at a highest place of the dividend is "1" or "0";
judging the dividend to be negative in cases where the binary digit is "1"; and
judging the dividend not to be negative in cases where the binary digit is "0".

In the above steps, because the dividend is generally designated according to the twos complement, the most significant bit of the dividend functions as a sign bit. Therefore, in cases where the binary digit positioned at the highest place (or the most significant bit) of the dividend is "1", the dividend is negative. Also, in cases where the binary digit is "0", the dividend is not negative.

Accordingly, the sign of the dividend can be easily judged.

Also, it is preferred that the method further include:
storing digital signals obtained by encoding picture information in a first buffer;
storing the number N in a second buffer to specify the value of the divisor;
decoding the digital signals to the dividends which each are judged in the judging steps; and
reproducing the picture information from the first binary numerals and the second binary numerals which each are output by the outputting steps.

In the above steps, each of the digital signals is decoded to the dividend so that the dividend is divided according to the method of the present invention. Thereafter, the first binary numerals and the second binary numerals obtained by dividing the dividends are, for example, transformed according to the inverse discrete cosine transform processing to reproduce the picture information.

Accordingly, the method for dividing the dividend is very useful for the reproduction of the picture information. Also, the picture information can be clearly reproduced.

### BRIEF DESCRIPTION OF THE DRAWINGS

The objects, features and advantages of the present invention will be apparent from the following description taken in conjunction with the accompanying drawings, in which:
Fig. 1 is a block diagram of a conventional digital divider to show the relationship between a dividend and a quotient obtained by dividing the dividend by a divisor 2⁴, a remainder being rounded down to obtain the quotient in the conventional digital divider;
Fig. 2 shows a plurality of eight bits of positive and negative dividends expressed by the binary notation and resulting quotients obtained by dividing the dividends by a divisor 2⁴ in the conventional digital divider shown in Fig. 1, in tabular form;
Fig. 3 graphically shows the relationship between the dividend shown in Fig. 2 and the resulting quotient shown in Fig. 2;
Fig. 4 is a block diagram of a digital divider according to a first embodiment of the present invention;

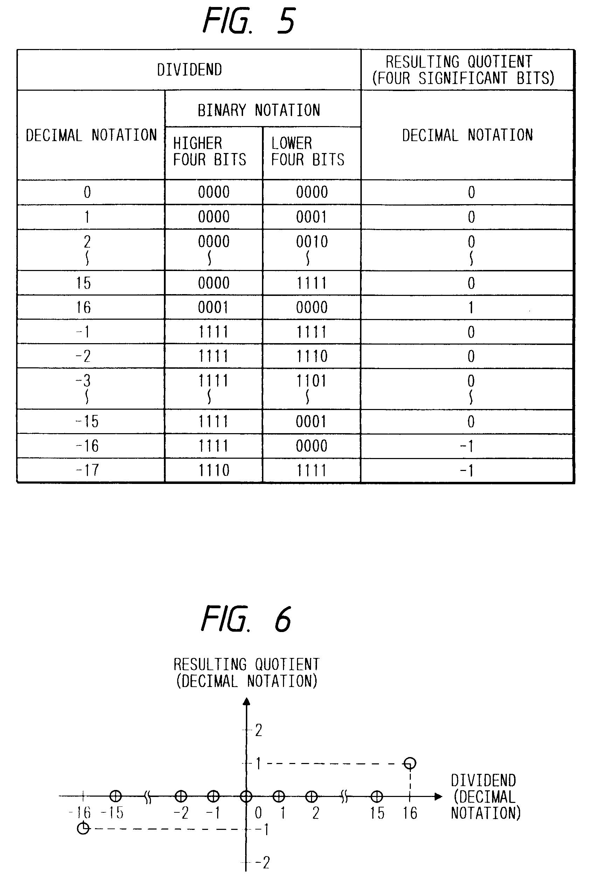

Fig. 5 shows a plurality of eight bits of positive and negative dividends expressed by the binary notation and resulting quotients obtained by dividing the dividends by a divisor 2⁴ in the digital divider shown in Fig. 4, in tabular form;
Fig. 6 graphically shows the relationship between the dividend shown in Fig. 5 and the resulting quotient shown in Fig. 5;

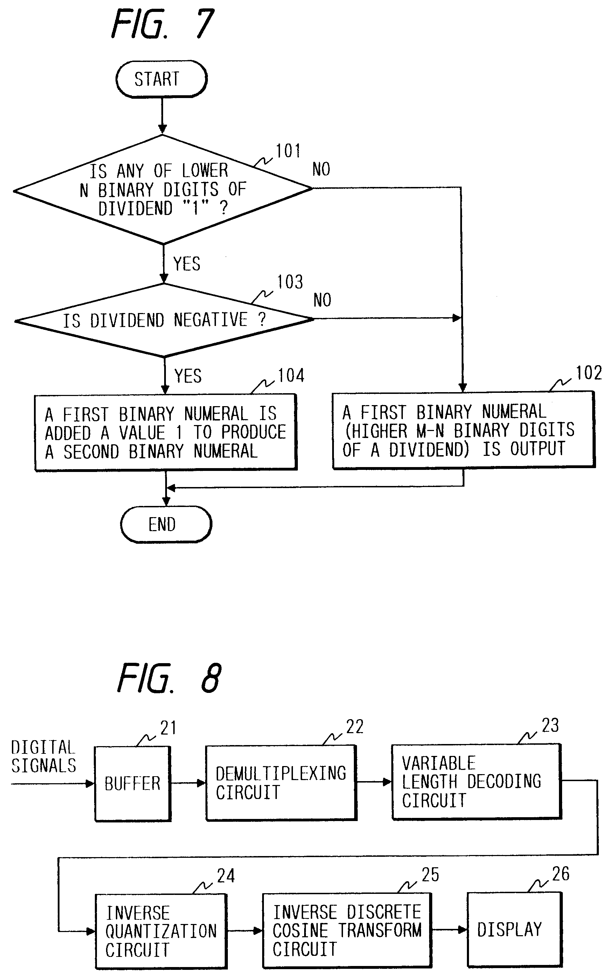

Fig. 7 is a flow chart showing the procedure of a method for dividing a positive or negative dividend by a divisor and rounding down a remainder; and
Fig. 8 is a block diagram of a data processing system in which the method of which the procedure is shown in Fig. 7 is executed according to the inverse quantization processing.

### DETAIL DESCRIPTION OF THE PREFERRED EMBODIMENTS

Preferred embodiments of a digital divisor according to the present invention are described with reference to drawings.

Fig. 4 is a block diagram of a digital divider according to a first embodiment of the present invention, a positive or negative dividend being divided by a divisor, and a remainder designated by binary digits positioned at lower places than the fifth place being rounded down.

As shown in Fig. 4, an eight-bit of dividend consisting of a series of binary digits A(7) to A(0) is input in a digital divider 12 to obtain a four-bit of resulting quotient consisting of a series of binary digits Y(3) to Y(0) after dividing the dividend by a divisor of which the value is 2⁴. In this case, the bit occupied by the binary digit A(7) denotes the most significant bit of the dividend, and the bit occupied by the binary digit A(0) denotes the least significant bit of the dividend.

In detail, the digital divider 12 comprises an incremental unit 13 for adding a value 1 to a first binary numeral designated by the higher four binary digits A(7) to A(4) of the dividend to output a second binary numeral designated by a series of binary digits P(3) to P(0), a logical OR gate 14 for receiving the lower four binary digits A(3) to A(0) of the dividend in parallel and logically judging whether or not a remainder is generated when the dividend is divided by the divisor before outputting a judged signal Sj, a logical AND gate for receiving both the binary digit A(7) and the judged signal Sj provided from the logical OR gate 14 and outputting a selecting signal SEL.

In cases where at least one of the binary digits A(3) to A(0) is designated by the binary digit "1", the remainder is generated when the dividend is divided by the divisor. Therefore, the judged signal Sj output from the logical OR gate 14 is designated by the binary digit "1". On the other hand, in cases where all of the binary digits A(3) to A(0) are designated by the binary digit "0", the remainder is not generated. Therefore, the judged signal Sj is designated by the binary digit "0". Also, in cases where the dividend is negative, the binary digit A(7) of the most significant bit is "1" because the negative dividend is designated according to the twos complement expression. This is, the most significant bit functions as a sign bit. As a result, in cases where the dividend is negative and the remainder is generated, the selecting signal SEL output from the logical AND gate 15 is designated by the binary digit "1". Also, in cases where the dividend is positive or in cases where the remainder is not generated, the selecting signal SEL is designated by the binary digit "0".

The digital divider 12 further comprises a four-bit selector 16 for receiving the second binary numeral consisting of the four binary digits P(3) to P(0) provided from the incremental unit 13, receiving the first binary numeral consisting of the higher four binary digits A(7) to A(4) of the dividend, receiving the selecting signal SEL provided from the logical AND gate 15, and outputting either the first binary numeral or the second binary numeral as the resulting quotient consisting of binary digits Y(3) to Y(0) according to the selecting signal SEL. The bit occupied by the binary digit Y(3) denotes the most significant bit of the resulting quotient, and the bit occupied by the binary digit Y(0) denotes the least significant bit of the resulting quotient.

In the four-bit selector 16, either the four binary digits P(3) to P(0) or the higher four binary digits A(7) to A(4) of the dividend are selected as the resulting quotient consisting of the four binary digits Y(3) to Y(0) according to the selecting signal SEL. That is, when the selecting signal SEL is designated by the binary digit "1", the second binary numeral consisting of the four binary digits P(3) to P(0) is selected. On the other hand, when the selecting signal SEL is designated by the binary digit "0", the first binary numeral consisting of the four binary digits A(7) to A(4) is selected.

For example, in cases where the dividend is zero or positive, the selecting signal SEL is designated by the binary digit "0" because the binary digit A(7) is "0". Therefore, the first binary numeral consisting of the four binary digits A(7) to A(4) is selected. In short, the resulting quotient obtained in the digital divider 12 is the same as that obtained by the conventional digital divider 11.

In cases where the dividend is negative and the absolute value of the dividend is the multiple of the divisor, the selecting signal SEL is designated by the binary digit "0" because the remainder is not generated. Therefore, the first binary numeral consisting of the four binary digits A(7) to A(4) is selected in the four-bit selector 16. In short, the resulting quotient obtained in the digital divider 12 is the same as that obtained by the conventional digital divider 11.

In cases where the dividend is negative on condition that the absolute value of the dividend does not agree with the multiple of the divisor, the binary digit A(7) is "1" because the negative dividend is designated according to the twos complement expression, and the judged signal Sj is designated by the binary digit "1" because at least one of the lower four binary digits A(3) to A(0) of the dividend is "1" as shown in Fig. 5. Therefore, the selecting signal SEL is designated by the binary digit "1" so that the second binary numeral consisting of the four binary digits P(3) to P(0) is selected in the four-bit selector 16. In this case, because the second binary numeral is larger than the first binary numeral by a value 1 and because the second binary numeral is zero or negative, the absolute value of the first binary numeral is larger than that of the second binary numeral by a value 1.

For example, in cases where the dividend ranges from a negative value -1 to a negative value -15, the first binary numeral is designated by a binary digit string "1111" denoting a negative value -1 in the decimal expression, and the second binary numeral is designated by a binary digit string "0000" denoting a zero. Therefore, the absolute value of the first binary numeral is higher than that of the second binary numeral by a value 1. Also, in cases where the dividend ranges from a negative value -17 to a negative value -31, the first binary numeral is designated by a binary digit string "1110" denoting a negative value -2 in the decimal expression, and the second binary numeral is designated by a binary digit string "1111" denoting a value -1. Therefore, the absolute value of the first binary numeral is larger than that of the second binary numeral by a value 1.

As a result, as shown in Figs. 5 & 6, a first absolute value of the resulting quotient obtained by dividing a positive dividend agrees with a second absolute value of the resulting quotient obtained by dividing a negative dividend of which the absolute value is equal to the positive dividend.

Also, because the lower four binary digits A(3) to A(0) of the dividend are not output from the four-bit selector 16, the remainder generated by dividing the dividend by the divisor is rounded down.

Accordingly, when digital picture signals are compressed or expanded according to the normalization processing, the scaling processing or the inverse quantization processing, the definition of the picture displayed on a screen does not deteriorate. That is, the picture reproduced by compressing or expanding the digital picture signals can be clearly displayed on the screen even though each of the signals is transformed to a piece of negative data before the piece of negative data is divided by a divisor.

In the first embodiment described above, the dividend input in the digital divider 12 ranges from -128 to +127 in the decimal expression because the most significant bit of the dividend functions as the sign bit. However, the range of the dividend is not limited. That is, in cases where the number of higher places of binary digits of the dividend received by the incremental unit 13 is suitably set and the number of binary digits selected by the four-bit selector 16 agrees with the number of binary digits received by the incremental unit 13, the number of binary digitals constituting the dividend can be increased. Therefore, the range of the dividend can be arbitrarily set.

Also, the value of the divisor is 2⁴ in the first embodiment because the four lower places of binary digits A(3) to A(0) of the dividend are not provided to the four-bit selector 16 but provided to the logical OR gate 14. However, the value of the divisor is not limited to 2⁴ in cases where the number of lower places of binary digits of the dividend is suitably set. That is, the value of the divisor can be set to 2^{N} (N is the arbitrary number of lower places of binary digits of the dividend).

Next, a method for dividing a positive or negative dividend by a divisor and rounding down a remainder is described with reference to Fig. 7 according to the present invention.

Fig. 7 is a flow chart showing the procedure of a method for dividing a positive or negative dividend by a divisor to obtain a quotient and rounding down a remainder.

An M-bit dividend consisting of a series of binary digits A(i) (i=0 to M-1, M is a natural number) is initially stored in a first buffer. In this case, the dividend is determined by decoding a digital signal obtained by encoding picture information. The bit occupied by the binary digit A(M-1) is the most significant bit and functions as a sign bit because the dividend is designated according to the twos complement expression. The bit occupied by the binary digit A(0) is the least significant digit. Also, a number N (N is a natural number and M≧N) representative of a divisor 2^{N} by which the divider should divide the divident is stored in a second buffer.

Thereafter, the dividend stored in the first buffer and the number N which is representative of the divisor 2^{N} and is stored in the second buffer are transmitted to a first judging circuit. In the judging circuit, as shown in Fig. 7, it is judged in a step 101 whether or not at least one of lower N binary digits A(N-1) to A(0) of the dividend is "1". In cases where all of the binary digits A(N-1) to A(0) is "0", A remainder is not generated when the dividend is divided by the divisor. In this case, a first absolute value of a quotient obtained by dividing a positive dividend agrees with a second absolute value of a quotient obtained by dividing a negative dividend of which the absolute value is equal to the positive dividend. Therefore, the procedure proceeds to a step 102.

In the step 102, a first binary numeral consisting of a series of higher M-N binary digits A(M-1) to A(N) of the dividend is output to a printer as a quotient obtained by dividing the dividend by the divisor. On the other hand, in cases where at least one of lower N binary digits A(N-1) to A(0) of the dividend is "1", a remainder is generated when the dividend is divided by the divisor. Therefore, the procedure proceeds to a step 103.

In the step 103, it is judged in a second judging circuit whether or not the dividend is negative by checking the binary digit A(M-1) of the sign bit. In cases where the dividend is not negative but positive or zero, the procedure proceeds to the step 102 so that the first binary numeral is output to the printer. On the other hand, in cases where the dividend is negative, the first absolute value is smaller than the second absolute value. Therefore, the procedure proceeds to a step 104.

In the step 104, the first binary numeral is transmitted from the second judging circuit to an arithmetic processing unit and is added a value 1 to produce a second binary numeral. Thereafter, the second binary numeral is output as the quotient to the printer.

Accordingly, the method for dividing the negative or positive dividend by the divisor according to the present invention can be executed in a data processing system. Therefore, even though the dividend is negative, the division cab be accurately executed according to the method.

As a result, the picture reproduced by compressing or expanding digital picture signals can be clearly displayed on the screen even though each of the signals is transformed to a piece of negative data before the piece of negative data is divided by a divisor, in the same manner as in the digital divider 12 shown in Fig. 4.

Next, an embodiment of the method described above according to the present invention is described with reference to Fig. 8.

Fig. 8 is a block diagram of a data processing system in which the method of which the procedure is shown in Fig. 7 is executed according to the inverse quantization processing.

As show in Fig. 8, a plurality of digital signals obtained by encoding picture information are stored in a buffer 21. The digital signals are multiplexed to efficiently transmit through a physical transmission route or a physical transmission medium according to a conventional procedure. Thereafter, the digital signals are demultiplexed in a demultiplexing circuit 22. Therefore, the digital signals can be decoded independent of one another to reproduce the picture information on a display. Thereafter, each of the digital signals demultiplexed in the demultiplexing circuit 22 is decoded in a variable length decoding circuit 23 to produce a piece of decoded data of which the number of bits is variable. Thereafter, each piece of decoded data produced in the variable length decoding circuit 23 is inversely quantized in an inverse quantization circuit 24 to obtain a piece of inversely quantized data according to the inverse quantization processing. In this case, the decoded data is treated as a dividend which is divided by a divisor according to the method shown in FIg. 8. Thereafter, the inversely quantized data is transformed in an inverse discrete cosine transform circuit 25 to reproduce the picture information. The picture information reproduced in the inverse discrete cosine transform circuit 25 is displayed on a display 26.

Accordingly, the method for dividing the dividend can be utilized to reproduce the picture information in the data processing system.

It is preferred that the method described with reference to Fig. 7 is programmed to divide the dividend by the divisor in a computer system. In this case, the method is embodied without utilizing any buffer nor any circuit other than the computer system.

Also, it is preferred that the digital divider 12 shown in Fig. 4 is incorporated in the inverse quantization circuit 24. In this case, the digital signals can be decoded to reproduce the picture information by utilizing the digital divider 12.

Having illustrated and described the principles of our invention in a preferred embodiment thereof, it should be readily apparent to those skilled in the art that the invention can be modified in arrangement and detail without departing from such principles. We claim all modifications coming within the spirit and scope of the accompanying claims.

## Claims

1. A digital divider for dividing a dividend to obtain a quotient, comprising:
adding means for adding a value 1 to a first binary numeral consisting of a series of binary digits positioned at higher places of the dividend to generate a second binary numeral;
first judging means for judging whether or not a third binary numeral consisting of a series of binary digits positioned at lower places of the dividend is zero, the dividend consisting of the binary digits positioned at the higher places thereof and the binary digits positioned at the lower places thereof;
second judging means for judging whether or not the dividend is negative; and
selecting means for selecting the second binary numeral generated by the adding means as the quotient in cases where it is judged by the first judging means that the third binary numeral is not zero and it is judged by the second judging means that the dividend is negative, selecting the first binary numeral as the quotient in cases where it is judged by the first judging means that the third binary numeral is zero, selecting the first binary numeral as the quotient in cases where it is judged by the second judging means that the dividend is not negative, and outputting the quotient.

2. A digital divider according to claim 1 in which the adding means is an incremental unit in which the binary digits positioned at the higher places of the dividend are provided to increment the value of the first binary numeral before incremented binary digits are output as the second binary numeral.

3. A digital divider according to claim 1 in which the first judging means is a logical OR gate in which the binary digits positioned at the lower places of the dividend are received before a first judging signal logically generated according to a function of an OR gate is output.

4. A digital divider according to claim 1 in which the second judging means is a logical AND gate in which both the binary digit positioned at the highest place of the dividend and the first judging signal generated by the logical OR gate are received before a second judging signal logically generated according to a function of an AND gate is provided to the selecting means.

5. A digital divider according to claim 1, further including:
first buffer means for storing digital signals obtained by encoding picture information;
second buffer means for storing a natural number N to specify a value 2^{N} of a divisor, the number of binary digits constituting a third binary numeral judged by the first judging means being equal to the natural number N;
decoding means for decoding the digital signals stored in the first buffer means to produce dividends which each are added by the adding means and are judged in the first judging means and the second judging means; and
reproducing means for reproducing the picture information by dividing each of the dividends decoded by the decoding means by the divisor stored in the second buffer means, the picture information reproduced by the reproducing means consisting of the quotients selected by the selecting means.

6. A method for dividing a dividend consisting of M bits of binary digits (M is a natural number) by a divisor 2^{N} (N is a natural number and M≧N) to obtain a quotient, comprising the steps of:
judging whether or not at least one of lower N bits of binary digits of the dividend is "1";
outputting a first binary numeral consisting of a series of upper M-N bits of binary digits of the dividend as the quotient in cases where all of the lower N bits of binary digits of the dividend is "0";
judging whether or not the dividend is negative in cases where at least one of the lower N bits of binary digits of the dividend is "1";
outputting the first binary numeral in cases where the dividend is not negative;
adding a value 1 to the first binary numeral to produce a second binary numeral in cases where the dividend is negative; and
outputting the second binary numeral as the quotient in cases where at least one of the lower N bits of binary digits of the dividend is "1" and the dividend is negative.

7. A method according to claim 6 in which the step of judging whether or not the dividend is negative includes:
checking whether a binary digit positioned at a highest place of the dividend is "1" or "0";
judging the dividend to be negative in cases where the binary digit is "1"; and
judging the dividend not to be negative in cases where the binary digit is "0".

8. A method according to claim 6, further including:
storing digital signals obtained by encoding picture information in a first buffer;
storing the number N in a second buffer to specify the value of the divisor;
decoding the digital signals to the dividends which each are judged in the judging steps; and
reproducing the picture information from the first binary numerals and the second binary numerals which each are output by the outputting steps.
